# EUROPÄISCHE PATENTSCHRIFT

(11) **EP 3 810 348 B1**
(45) Veröffentlichungstag und Bekanntmachung des Hinweises auf die Patenterteilung: **02.08.2023**
(21) Anmeldenummer: 19728974.7
(22) Anmeldetag: 05.06.2019
(51) Int. Cl.: B21D 7/024, B21D 7/02, B21D 11/10, B21D 11/20

(54) **BIEGEMASCHINE ZUR HERSTELLUNG VON BIEGETEILEN AUS FLACHMATERIAL**
BENDING MACHINE FOR PRODUCING BENT PARTS FROM FLAT MATERIAL
MACHINE À CINTRER PERMETTANT DE PRODUIRE DES PIÈCES CINTRÉES À PARTIR D'UN MATÉRIAU PLAT

(30) Priorität: 19.06.2018 DE 102018209883
(43) Veröffentlichungstag der Anmeldung: 28.04.2021
(73) Patentinhaber: WAFIOS Aktiengesellschaft, 72764 Reutlingen (DE)
(72) Erfinder: SCHÖNFELD, Rainer, 72793 Pfullingen (DE); LAAB, Timo, 72810 Gomaringen (DE)
(74) Vertreter: Patentanwälte Ruff, Wilhelm, Beier, Dauster & Partner mbB
(86) Internationale Anmeldenummer: PCT/EP2019/064637
(87) Internationale Veröffentlichungsnummer: WO 2019/243050

(56) Entgegenhaltungen:
- DE-A1- 19 714 663
- DE-A1-102014 111 015
- DE-B3-102010 022 879
- US-A- 5 463 890

## Beschreibung

### ANWENDUNGSGEBIET UND STAND DER TECHNIK

Die Erfindung betrifft eine Biegemaschine zur Herstellung von Biegeteilen aus Flachmaterial gemäß dem Oberbegriff von Anspruch 1.

Auf dem Markt werden zunehmend Fahrzeuge mit voll- oder teilelektrischem Antrieb angeboten. Die Fahrzeuge besitzen meist leistungsfähige Energiespeichersysteme mit mehreren Batteriemodulen. Die elektrische Energie muss zwischen den einzelnen Batteriemodulen transportiert werden. Dazu werden isolierte und gebogene Kupfer- oder Aluminiumschienen verwendet, die auch als "Stromschienen" bezeichnet werden. Weiterhin werden zunehmend die in Längsrichtung von Fahrzeugen zwischen Front und Heck laufenden Kabelbäume durch Stromschienen ersetzt. Aufgrund der immer größer werdenden Ströme werden Stromschienen mit entsprechend großem stromführenden Querschnitt benötigt. Da die für die Verlegung von Stromschienen zur Verfügung stehenden Bauräume zum Teil relativ eng und geometrisch komplex sind, werden in vielen Fällen Stromschienen benötigt, die an einer oder mehreren Stellen Biegungen aufweisen.

Stromschienen werden in der Regel unter Verwendung von entsprechend geformtem Flachmaterial hergestellt, z.B. Kupfer- oder Aluminiumflachdraht mit flachem Rechteckquerschnitt. Das Flachmaterial kann abschnittsweise oder durchgehend mit einer elektrisch isolierenden Isolationsschicht ummantelt sein.

Für komplexere Einbauumgebungen kann es zweckmäßig sein, in mindestens einem Abschnitt des Flachmaterials eine flache Biegung zu erzeugen. Eine flache Biegung im Sinne dieser Anmeldung ist eine bleibende Verformung des Flachmaterials in Form einer Biegung um eine kurze Seite (Schmalseite) des Flachmaterials, so dass eine der kurzen Seiten an der Innenkontur der Biegung liegt, die gegenüberliegende kurze Seite an der Außenkontur der Biegung liegt und die Flachmaterial-Abschnitte bzw. Schenkel vor und hinter der Biegung möglichst mit ihren Breitenrichtung in einer gemeinsamen Ebene liegen.

Bekannte gattungsgemäße Biegemaschinen zur Herstellung von Biegeteilen aus Flachmaterial haben eine Einzugseinrichtung zum Einziehen von Flachmaterial von einem Materialvorrat mit Flachmaterial, eine Biegeeinrichtung mit einem Biegekopf zum Biegen des Flachmaterials zu einem zwei- oder dreidimensional gebogenen Biegeteil aus Flachmaterial und eine Schnitteinrichtung zum Abtrennen des Biegeteils von dem zugeführten Flachmaterial. Die Beigeteile werden damit in der Biegemaschine erzeugt und danach in der Biegemaschine vom zugeführten Material abgetrennt. Der Biegekopf weist eine Biegeform mit einer Umfangsnut zum Aufnehmen eines zu biegenden Abschnitts des Flachmaterials sowie ein um die Biegeform herum drehbares Biegewerkzeug zum Angreifen an einem umzubiegenden Abschnitt des Flachmaterials auf. Die Biegeform wird gelegentlich auch als Biegedorn bezeichnet. Die Biegeform stabilisiert die Innenkontur des zu verbiegenden Materials bei der Biegeoperation.

Der umzubiegende Abschnitt ist derjenige Abschnitt des Flachmaterials, dessen Orientierung gegenüber einem nicht umzubiegenden Abschnitt durch die Biegeoperation mittels plastischer Verformung bleibend verändert werden soll. Die Orientierung des an der Zufuhrseite liegenden nicht umzubiegenden Abschnitts soll in der Regel beim Biegevorgang im Wesentlichen unverändert bleiben.

Das drehbare Biegewerkzeug ist mithilfe eines durch eine Steuereinrichtung gesteuerten Biegeantriebs der Biegemaschine um eine Biegeachse drehbar. Die Biegeachse ist die Drehachse des drehbaren Biegewerkzeugs des Biegekopfs. Senkrecht zur Biegeachse verläuft die Biegeebene. Die Biegeoperation erzeugt am Flachmaterial eine ebene Biegung parallel zur Biegeebene.

Das drehbare Biegewerkzeug kann beispielsweise einen Biegestift oder eine Biegerolle aufweisen, der bzw. die zum Biegen an einer Position mit Abstand von der Biegeachse einseitig an den umzubiegenden Abschnitt angelegt wird.

Beim Biegeprozess wird zunächst ein mit einer Biegung zu versehender Flachmaterialabschnitt in eine Ausgangsstellung im Eingriffsbereich des Biegekopfs gebracht. Das zugeführte Flachmaterial greift dabei mit derjenigen Schmalseite, die nach der Biegung die Innenkontur der Biegung bilden soll, teilweise in die Umfangsnut der Biegeform ein. Ein Bereich an der gegenüberliegenden Schmalseite ragt in der Regel aus der Umfangsnut heraus.

Danach wird das drehbare Biegewerkzeug in Kontakt mit dem umzubiegenden Abschnitt gebracht, z.B. durch einseitiges Anlegen eines Biegestifts oder einer Biegerolle des Biegewerkzeugs an den umzubiegenden Abschnitt. Danach wird in einer Biegeoperation durch Drehen des drehbaren Werkzeugs um die Biegeachse eine Biegung zwischen dem nicht umzubiegenden Abschnitt des Flachmaterials und dem umzubiegenden Abschnitt erzeugt. Die Außenkontur der Biegeform am radial innen liegenden Grund der Umfangsnut stabilisiert dabei die Innenkontur der Biegung und gibt deren Radius vor. Der nicht umzubiegende Abschnitt bleibt dabei in seiner Orientierung in der Regel unverändert. Während des Biegens wird kein Flachmaterial nachgeschoben bzw. zugeführt. Nach dem Biegevorgang spannen der umgebogene und der nicht umgebogene Abschnitt idealerweise eine Ebene auf, in der auch die erzeugte Biegung liegt (ebene Biegung).

Die Tiefe der Umfangsnut in Radialrichtung der Biegeform beträgt in der Regel weniger als die Breite des Flachmaterials, so dass dieses nur zum Teil seitlich in die Umfangsnut hineinpasst. Der Bereich des Flachmaterials, der an der Außenkontur der zu erzeugenden Biegung liegt, bleibt außerhalb der Umfangsnut. Die lichte Höhe der Umfangsnut, also der lichte Abstand zwischen einer unteren und einer oberen Begrenzungsfläche der Umfangsnut, ist in der Regel an die Dicke des Flachmaterials (gemessen parallel zu einer kurzen Seite) so angepasst, das bei eingeführtem Flachmaterial in der Höhe etwas Spiel bzw. ein kleiner Spalt verbleibt. Aufgrund des Biegeprozesses wird der Bereich der Außenkante gestreckt und der Bereich der Innenkante des Flachmaterials gestaucht. Eine Dickenveränderung des Flachmaterials in vertikaler Richtung (Höhenrichtung der Umfangsnut) wird hier als Wulstbildung bzw. Verdickung bezeichnet.

Die Verdickung an der Innenkontur kann sich aufgrund des Spalts zwischen dem Flachmaterial und der Umfangsnut entwickeln, wodurch das Flachmaterial erst nach dem Biegeprozess im Bereich der Umfangsnut fest anliegt, vorzugsweise ohne Klemmung. Bis zu diesem Punkt kann sich das Flachmaterial in der Umfangsnut frei verwinden. Dieser Effekt wird als nachteilig angesehen, da er zu Ungenauigkeiten der Biegeteilgeometrie führen kann. Umso mehr Biegungen in einem Biegeteil erzeugt werden, desto ungenauer kann die Herstellung werden.

Manchmal werden Biegeteil-Geometrien mit relativ kleinen Biegeradien angestrebt. Bei Biegeteilen mit mehreren aufeinander folgenden Biegungen werden gelegentlich auch relativ kurze Schenkellängen zwischen den Biegungen angestrebt, z.B. aufgrund begrenzten Bauraums in der Einbauumgebung. Die Biegeradien können jedoch nicht unter einen unteren Grenzwert hinaus verkleinert werden, da sich das Flachmaterial durch den erhöhten Umformgrad noch mehr verdicken würde und ggf. verklemmen könnte. Wird zur Vermeidung von Verklemmung mehr Höhe in der Rille zugelassen, kann die Verwindung und Ungenauigkeit deutlich zunehmen.

Die DE 10 2010 222 879 B3 offenbart eine Biegevorrichtung für stab- oder rohrförmige Werkstücke. Die Biegevorrichtung hat eine um eine Biegeachse verdrehbare Biegeform, die eine Formnut umfasst und ein oberes sowie ein unteres Formteil aufweist, die beide in einem geschlossenen Zustand und in einen voneinander entfernten offenen Zustand verbringbar sind. Dem unteren Formteil ist eine Aufnahmeplatte vorgeschaltet. Eine Fixierung zum Zusammenhalten der Biegevorrichtung ist zwischen oberem Formteil und einer Aufnahmeplatte vorgesehen. Der Formnut ist ein Klemmbacken zugeordnet, der gegen sie anfahrbar ist. Zwischen Aufnahmeplatte und unterem Formteil ist eine Spreizeinrichtung angebracht, die beim Spreizen das untere Formteil gegen das obere Formteil hin verschiebt, während im ungespreiztem Zustand das untere Formteil durch eine Betätigungseinrichtung vom oberen Formteil zum Erreichen des offenen Zustands der Biegeform getrennt wird. Die Spreizeinrichtung wird vom Klemmbacken bei dessen Anfahren gegen die Formnut aufgespreizt und beim Entfernen des Klemmbackens von der Formnut wird ihr gespreizter Zustand aufgehoben.

Die Patentschrift US 5,463,890 beschreibt eine automatische Biegevorrichtung für bandförmiges Flachmaterial.

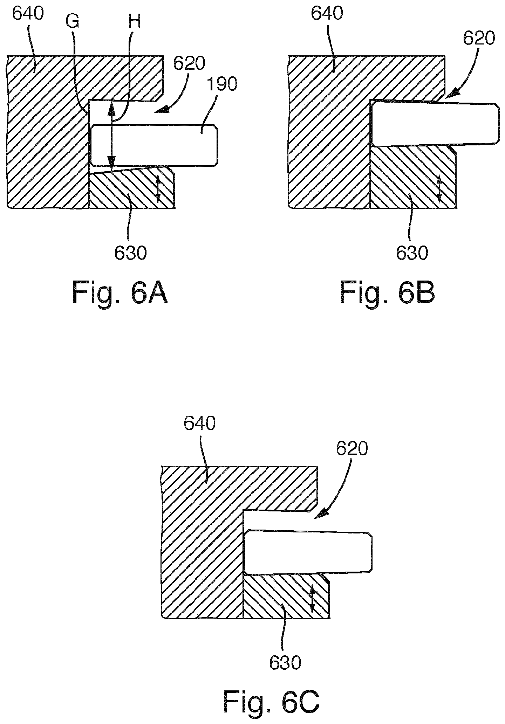

Dokument DE 10 2014 111 015 A1 offenbart eine Biegeeinrichtung zur Herstellung einer Bandfeder, welche zumindest als ringscheibenförmiges Segment ausgebildet ist. Dabei ist eine Trommel mit einer Anlagefläche an der Mantelfläche der Trommel für eine innere Schmalseite des bandförmigen Materials vorgesehen, welcher zumindest eine Umlenkeinrichtung zugeordnet ist, die im Abstand zur Trommel einstellbar ist, welcher der Breite des bandförmigen Materials entspricht, wobei die Anlagefläche der Trommel einen Radius aufweist, welcher im Wesentlichen dem Innenradius eines zu biegenden Segmentes entspricht. Bei einer Ausführungsform (Fig. 6) ist die Trommel zweiteilig ausgebildet und besteht aus einem Unterteil und einem Oberteil. Das Unterteil weist einen Absatz auf, an welchem die Anlagefläche vorgesehen ist, wobei der Absatz zusammen mit dem Oberteil wiederum eine Nut bildet. Diese Ausführungsform weist den Vorteil auf, dass in Abhängigkeit der Einstellung des Abstandes einer Anlagefläche am Oberteil zum Unterteil die Breite der Nut veränderbar ist.

Dokument DE 197 14 663 A1 offenbart ein elektrisches Schneid- und Biegewerkzeug. Mit einem um eine Biegeform drehbaren Biegewerkzeug.

### AUFGABE UND LÖSUNG

Es ist eine Aufgabe der Erfindung, eine Biegemaschine zur Herstellung von Biegeteilen aus isoliertem oder nicht isoliertem Flachmaterial bereitzustellen, die in der Lage ist, die Qualität von Biegeteilen aus isoliertem oder nicht isoliertem Flachmaterial im Bereich von flachen Biegungen gegenüber herkömmlichen Biegemaschinen zu verbessern. Insbesondere sollen Verwindungen von flachen Biegungen möglichst vermieden werden. Bei Bedarf sollen relativ kleine Biegeradien und kurze Schenkellängen zwischen aufeinanderfolgenden Biegungen möglich sein. Beim Biegen von isoliertem Flachmaterial soll die Isolierung nach dem Biegen möglichst ohne Einschränkung der Isolationswirkung wirksam sein.

Zur Lösung dieser Aufgabe stellt die Erfindung eine Biegemaschine mit den Merkmalen von Anspruch 1 bereit. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Gemäß der beanspruchten Erfindung wird eine gattungsgemäße Biegemaschine bereitgestellt, die eine Biegeform aufweist, welche als geteilte Biegeform ausgelegt ist. Die geteilte Biegeform weist ein unteres Formteil und ein relativ zum unteren Formteil bewegliches oberes Formteil auf. Eine untere Begrenzungsfläche der Umfangsnut ist an dem unteren Formteil ausgebildet, während eine obere Begrenzungsfläche der Umfangsnut an dem oberen Formteil ausgebildet ist. Das obere Formteil und das untere Formteil sind zum Verändern der lichten Höhe der Umfangsnut zwischen einer geschlossenen (ersten) Konfiguration mit geringerer lichter Höhe der Umfangsnut und einer geöffneten (zweiten) Konfiguration mit gegenüber der geringen lichten Höhe größere lichter Höhe relativ zueinander verschiebbar.

Die Umfangsnut hat somit eine variable Höhe, wobei die Höhenveränderung (Abstandsänderung zwischen unterer und oberer Begrenzungsfläche) durch lineare Relativverschiebung der Formteile gegeneinander vorzugsweise stufenlos erfolgen kann.

Bei Verwendung einer in dieser Weise geteilten Biegeform kann die eingangs erwähnte Problematik des Verwindens von Flachmaterial bei der Herstellung einer flachen Biegung weitestgehend vermieden werden. Die lichte Höhe der Umfangsnut kann vor oder während des Einführens des noch nicht gebogenen Flachmaterials in die Umfangsnut so eingestellt werden, dass die lichte Höhe im Wesentlichen der Dicke des Flachmaterials (gemessen zwischen den Breitseiten) entspricht, so dass das Flachmaterial in Höhenrichtung formschlüssig, aber ohne zusammengepresst oder geklemmt zu werden, in der Umfangsnut sitzt. Beim Biegevorgang kann das Verwinden des Flachmaterials durch diesen Formschluss zwischen den Begrenzungsflächen minimiert werden. Zwar kommt es auch hier im Bereich der Innenkontur zu einem Zusammenstauchen des Flachmaterials, so dass sich dieses in Höhenrichtung ausdehnen möchte und eine temporäre Klemmung in der Umfangsnut entstehen kann. Eine eventuelle Klemmung ist jedoch nach Abschluss der Biegeoperation nicht störend, da die Biegeform zum Entnehmen des gebogenen Flachmaterials geöffnet und dadurch die lichte Höhe der Umfangsnut so weit vergrößert werden kann, dass das Flachmaterial ohne Klemmung oder ungewollte weitere Verbiegung entnommen werden kann.

Gemäß der beanspruchten Erfindung weist eines der Formteile eine Führungsöffnung zur axialen Führung einer Verschiebungsbewegung des anderen Formteils auf und das andere Formteil weist einen zum Einführen in die Führungsöffnung dimensionierten Führungsabschnitt und einen gegenüber dem Führungsabschnitt verbreiterten Kopfabschnitt auf, wobei eine radiale Außenfläche des Führungsabschnitts die Umfangsnut nach innen begrenzt und an dem Kopfabschnitt eine der Begrenzungsflächen der Umfangsnut ausgebildet ist. Bei manchen Ausführungsformen ist die Führungsöffnung am unteren Formteil ausgebildet, während der Führungsabschnitt und der Kopfabschnitt am oberen Formteil ausgebildet sind. Auch eine umgekehrte Anordnung wäre möglich.

Bei dieser Ausführungsform wird die Relativbewegung der Formteile gegeneinander im direkten Berührungskontakt durch korrespondierende Abschnitte der Formteile geführt. Der Führungsabschnitt kann eine komplett kreiszylindrische Außenfläche haben, sollte jedoch zumindest an derjenigen Seite, an welcher der Eingriff des Flachmaterials in die Umfangsnut erfolgt, eine zylindrische Außenkontur haben. Bei dieser Ausgestaltung wird die radial innenliegende Grundfläche der Umfangsnut durch den jeweils freiliegenden Teil der radialen Außenfläche des Führungsabschnitts gebildet. Die innenliegende Grundfläche der Nut ist daher unabhängig von der lichten Höhe der Umfangsnut ununterbrochen. Somit kann bei der Biegeoperation kein Material aus der Umfangsnut heraus nach innen verdrängt werden. Der Führungsabschnitt wirkt als Biegedorn und bestimmt mit dem Radius der Außenfläche den Innenradius der erzeugten Biegung.

Die obere Begrenzungsfläche und die untere Begrenzungsfläche können als ebene, zueinander parallele Flächen ausgestaltet sein, so dass die lichte Höhe der Umfangsnut über die gesamte radiale Ausdehnung der Umfangsnut im Wesentlichen konstant ist. Die Umfangsnut kann als Rechtecknut gestaltet sein.

Bei manchen Ausführungsformen gibt es dagegen signifikante Abweichungen von der parallelen Anordnung der oberen und unteren Begrenzungsflächen. Manche Ausführungsformen sind dadurch gekennzeichnet, dass die Umfangsnut einen radial innen liegenden inneren Nutbereich und einen radial weiter außen liegenden äußeren Nutbereich aufweist, wobei die lichte Höhe der Umfangsnut im inneren Nutbereich größer ist als im äußeren Nutbereich. Das Ausmaß des Höhenunterschieds ist u.a. abhängig vom Biegeradius: Je kleiner der Biegeradius ist, desto größer sollte die lichte Höhe der Umfangsnut im inneren Nutbereich im Verhältnis zum äußeren Nutbereich sein. Im äußeren Nutbereich oder einem Abschnitt davon kann vor der Biegeoperation eine Formschluss zwischen der Biegeform und dem in der Umfangsnut liegenden Flachmaterial hergestellt werden, wobei im inneren Nutbereich dann etwas Spiel bzw. ein Freiraum zwischen mindestens einer der Begrenzungsflächen und dem Flachmaterial bleibt. Vorzugsweise existieren im inneren Nutbereich Freiräume an beiden Breitseiten des Flachmaterials. Insbesondere kann es so sein, dass die Umfangsnut eine Querschnittsform aufweist, die bezogen auf eine senkrecht zur Biegeachse verlaufende Mittelebene durch die Umfangsnut spiegelsymmetrisch ist. Die Innenkontur der Biegung liegt innerhalb des inneren Nutbereichs. Der gestauchte Bereich in der Nähe der Innenkontur kann sich dann in den Freiraum oder die Freiräume im inneren Nutbereich ausdehnen. Im Vergleich zu einer Umfangsnut mit parallelen Begrenzungsflächen entstehen durch diese Nutgeometrie mit sich innen erweiternder Umfangsnut noch weniger Zwangskräfte auf das Flachmaterial, was sich u.a. bei der Herstellung von flachen Biegungen mit relativ kleinem Biegeradius als vorteilhaft herausgestellt hat.

Besondere Vorteile bieten Varianten mit einer Umfangsnut, deren innerer Nutbereich eine größere lichte Höhe hat als der äußere Nutbereich, beim Biegen von isolierten Flachmaterial, bei dem ein elektrisch leitender Träger aus Flachmaterial abschnittsweise oder durchgehend mit einer elektrisch isolierenden Isolationsschicht ummantelt ist. Nach den Beobachtungen der Erfinder besteht dann, wenn eine isolierte Stromschiene vollflächig geklemmt wird, die Gefahr, dass sich das Trägermaterial (zum Beispiel Aluminium) verformt und die demgegenüber weichere Isolationsschicht, die typischerweise aus einem Kunststoffmaterial besteht, verdrängt. Im Bereich der Innenkontur besteht dann die Gefahr, dass die Dicke der Isolationsschicht abnimmt und somit die Gefahr für einen Stromdurchschlag im Betrieb zunimmt. Diese Gefahr kann insbesondere bei den Ausführungsformen mit verbreiterndem innerem Nutbereich reduziert und gegebenenfalls ganz vermieden werden.

Die Nutgeometrie kann so sein, dass die untere Begrenzungsfläche und die obere Begrenzungsfläche der Umfangsnut in dem außen liegenden Nutbereich im Wesentlichen parallel zueinander verlaufen und die lichte Höhe ab einem Übergang von dem äußeren Nutbereich zu dem inneren Nutbereich in Richtung des Nutgrundes zunimmt. Die Zunahme ist vorzugsweise kontinuierlich, kann ggf. aber auch in einer oder mehreren Stufen erfolgen. Eine vorzugsweise kontinuierliche Zunahme der lichten Höhe in Richtung des Biegezentrums kann an die Zunahme der erwarteten Stauchung in der Nähe der Innenkontur angepasst sein. Außen ergibt sich dann im Bereich der Streckung gegebenenfalls etwas Spiel. Eine radiale Erstreckung des inneren Nutbereichs vom Nutgrund bis zum Übergang kann an die Breite des Flachmaterials derart angepasst sein, dass die radiale Erstreckung zwischen 30 % und 70 % der Breite des Flachmaterials beträgt. Der Mittelabschnitt des Flachmaterials, also die bei der Erzeugung einer flachen Biegung neutrale Zone zwischen den schmalen Seiten, kann im äußeren Nutbereich nahe am Übergang liegen, so dass ein Führungsabschnitt etwa in der Mitte des Flachmaterials gebildet wird. Weiter außen ergibt sich bei der Biegeoperation eine Dickenabnahme des Materials aufgrund von Streckung, weiter innen kommt es zu Stauchung und Verdickung, die durch den Freiraum ermöglicht werden.

Es gibt auch Ausführungsformen, bei denen die lichte Höhe der Umfangsnut vom radial äußeren Bereich der Umfangsnut nach radial innen kontinuierlich zunimmt. Eine derartige Umfangsnut hat eine keilförmige Querschnittsform.

Die Begrenzungsflächen sind vorzugsweise so gestaltet, dass sich der oben genannte Freiraum im Bereich der Innenkontur an beiden Breitseiten des eingeführten Flachmaterials, also oben und unten ergibt, insbesondere so, dass symmetrische Materialverdrängungsverhältnisse bezogen auf die Biegeebene möglich sind. Dadurch kann eine zu einer Verwindung des Biegeteils führende unsymmetrische Materialausdehnung im Bereich der Innenkontur vermieden werden, so dass die Biegung flach bleibt. Das wird bei manchen Ausführungsformen dadurch erreicht, dass die Umfangsnut eine Querschnittsform aufweist, die bezogen auf eine senkrecht zur Biegeachse verlaufende Mittelebene durch die Umfangsnut spiegelsymmetrisch ist.

Es gibt unterschiedliche konstruktive Möglichkeiten, das Öffnen und Schließen der geteilten Biegeform zu realisieren. Bei manchen Ausführungsformen ist das untere Formteil der geteilten Biegeform bezüglich eines Biegeformträgers fest montiert und das obere Formteil kann bezüglich des unteren Formteils mittels eines darauf wirkenden Antriebs angehoben und abgesenkt werden. Das Öffnen und Schließen der Umfangsnut durch Anheben bzw. Absenken des oberen Formteils wird auch als "Lüften der Biegeform" bezeichnet.

Alternativ ist es möglich, das obere Formteil in Bezug auf den Biegeformträger fest zu montieren und das untere Formteil absenkbar auszugestalten. Konstruktiv aufwendiger, aber ebenfalls möglich sind Varianten, bei denen sowohl das obere Formteil als auch untere Formteil beim Öffnen und Schließen der Biegeform bewegt werden können.

Die Biegeform kann an oder auf einem Biegeformträger drehfest montiert sein. Bei manchen Ausführungsformen ist dagegen die Biegeform als frei drehbare Biegerolle ausgeführt, die gegebenenfalls während einer Biegeoperation eine Ausgleichs-Drehbewegungen ausführen kann, während das Flachmaterial verformt wird.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
- Fig. 1: zeigt ein erstes Ausführungsbeispiel einer Biegemaschine zur Herstellung von zweidimensional oder dreidimensional gebogenen Biegeteilen aus isoliertem Flachmaterial mit einem Biegekopf mit geteilter Biegeform;
- Fig. 2: zeigt ein vergrößertes Detail aus Fig. 1;
- Fig. 3: zeigt Details des Biegewerkzeugs in schräger Perspektive,
- Fig. 4: zeigt Komponenten des Biegewerkzeugs in Seitenansicht.
- Fig. 5: zeigt eine Schnittansicht durch den Bereich der Umfangsnut der Biegeform bei einem ersten Ausführungsbeispiel.
- Fig. 6A, 6B und 6C: zeigen verschiedene Phasen einer Biegeoperation bei einem anderen Ausführungsbeispiel.

### DETAILLIERTE BESCHREIBUNG DER AUSFÜHRUNGSBEISPIELE

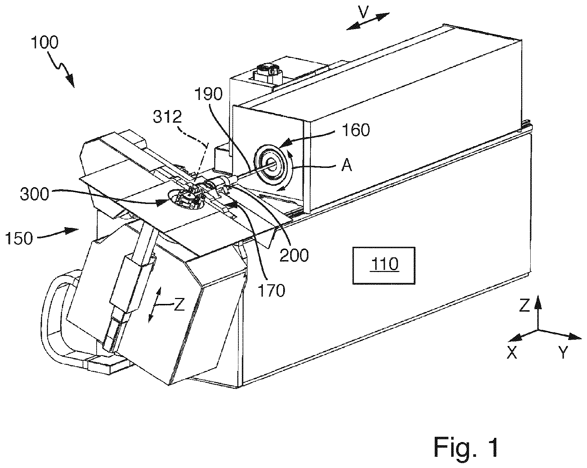

In Fig. 1 ist ein Ausführungsbeispiel einer Biegemaschine 100 zur Herstellung von zweidimensional oder dreidimensional gebogenen Biegeteilen aus isoliertem Flachmaterial 190 gezeigt. Die Biegemaschine hat ein mit Kleinbuchstaben x, y und z gekennzeichnetes, rechtwinkliges Maschinenkoordinatensystem MK mit einer vertikalen z-Achse und horizontalen x- und y-Achsen. Im dargestellten Beispiel verläuft die x-Achse parallel zu einer Einzugsrichtung, in der das zu biegende Flachmaterial mithilfe einer Einzugseinrichtung 160 einer nachgeschalteten Biegeeinrichtung 150 zugeführt wird. Von den Koordinatenachsen des Maschinenkoordinatensystems sind die später noch erwähnten geregelt angetriebenen Maschinenachsen zu unterscheiden, die mit Großbuchstaben (zum Beispiel A-Achse, Z-Achse etc.) bezeichnet werden. Eine Steuerungseinheit 110 der Biegemaschine steuert und koordiniert die Arbeitsbewegungen aller Maschinenachsen.

Das umzuformende Ausgangsmaterial, nämlich isoliertes Flachmaterial 190, wird mithilfe einer Einzugseinrichtung 160 durch die Biegemaschine gezogen. Die Einzugseinrichtung dient zum Zuführen des Flachmaterials von einem Materialvorrat. Die Vorschubkraft in Einzugsrichtung (parallel zur x-Richtung) entsteht dabei durch Reibung zwischen Einzugswalzen der Einzugseinrichtung und dem Flachmaterial. Je nach Bauart besitzt die Einzugseinrichtung mehr oder weniger Walzenpaare, beispielsweise drei oder vier Walzenpaare, wobei ein Walzenpaar ein Paar von gegenläufig drehend antreibbaren Einzugswalzen umfasst. Um das Flachmaterial schonend einzuziehen, sind die Einzugswalzen als einfache flache Zylinder, also mit im Wesentlichen kreiszylindrischer Umfangsfläche, gestaltet. Zur Unterstützung der Einzugswalzen befindet sich das Ausgangsmaterial im Beispielsfall in Form eines Coils auf einer motorbetriebenen Haspel. Beginnt die Maschine mit dem Einzug des Flachmaterials, wird ein Sensor angesprochen, der den Motor der Haspel ansteuert.

Bevor das Ausgangsmaterial (im Beispielsfall isoliertes Flachmaterial) in die Einzugseinrichtung eintritt, passiert das Flachmaterial eine Richteinheit, die im Beispielsfall eine Anzahl von versetzt angeordneten Rollen aufweist.

Für viele Biegeteile werden Biegungen in unterschiedlichen, im Winkel zueinander stehenden Biegeebenen benötigt, so dass die resultierenden Biegeteile dreidimensional gebogen sind. Um dies ohne komplizierten Aufbau der Biegeeinrichtung zu ermöglichen, ist bei der Biegemaschine des Ausführungsbeispiels vorgesehen, dass die Einzugseinrichtung 160 um die Einzugsachse in beiden Drehrichtungen drehbar ist (A-Achse). Dadurch kann auf einfache Weise zwischen einzelnen Biegeoperationen ein Wechsel zwischen Biegeebenen durchgeführt werden.

Die Komponenten der Biegeeinrichtung 150 selbst tauchen dann in Biegekopf-Achsrichtung (Z-Achse) senkrecht zur x-Richtung weg, um nach dem Wechsel der Biegeebene wieder in das Flachmaterial eingreifen zu können. Die Z-Achse hat im Beispielsfall einen winkligen Versatz zur z-Richtung um ca. 20°. Beim Ausführungsbeispiel werden die Einzugseinrichtung 160 und die vorgeschaltete Richteinrichtung mithilfe eines Servomotors einer entsprechenden Maschinenachse (A-Achse) gedreht.

Die Einzugseinrichtung ist auf parallel zur x-Richtung verlaufenden Führungsschienen geführt und mittels eines Verschiebungsantriebs (V-Achse) parallel zur x-Richtung axial verschiebbar. Zum Erzeugen von Biegungen an dem Flachmaterial 190 durch Umformung ist eine numerisch gesteuerte Biegeeinrichtung 150 vorgesehen. Im Biegebereich wird das Flachmaterial mithilfe eines CNC-gesteuerten Biegekopfs 300 der Biegeeinrichtung in die gewünschte Form gebogen. Optional kann ein CNC-gesteuerter Auflagetisch vorgesehen sein, um längere Materialabschnitte beim Biegen zu unterstützen.

Zwischen dem Biegebereich mit dem Biegekopf 300 der Biegeeinrichtung 150 und der Einzugseinrichtung 160 ist eine Schnitteinrichtung 170 montiert, die dafür vorgesehen ist, das fertigte Biegeteil (nach Abschluss aller Biegeoperationen) und ggf. einer oder mehrerer Verdreh-Operationen von dem zugeführten Flachmaterial abzutrennen. Die Schnitteinrichtung 170 der Biegemaschine ist als Beißschneideinrichtung ausgelegt, also so konfiguriert, dass das Flachmaterial mittels des Verfahrens "Beißschneiden" vom zugeführten Flachmaterial abgetrennt wird. Die Schnitteinrichtung weist zwei keilförmige Schneiden 172-1, 172-2 auf, zwischen denen das Flachmaterial 190 hindurchführbar ist. Die keilförmigen Schneiden sind zur Durchführung einer Schnittoperation relativ zueinander in gegenläufige Richtungen synchron und linear aufeinander zu bewegbar. Nach anderen Prinzipien arbeitende Schnitteinrichtungen, z.B. eine als Scherschnitteinrichtung ausgebildete Schnitteinrichtung, sind ebenfalls möglich.

Durch Rückwärtslaufen des Materialeinzugs ist es möglich, die letzte gefertigte Biegung in Richtung der Schnitteinrichtung 170 heranzuziehen, so dass das Biegeteil dicht nach einer Biegung getrennt werden kann. Bei manchen Varianten ist es möglich, die Schnitteinrichtung mithilfe eines eigenen Antriebs zu verfahren. Das fertig gebogene Biegeteil kann nach Ausführung der Schnittoperation entweder in eine dafür vorgesehene Kiste fallen oder von einer Automation aufgenommen und zum nächsten Arbeitsschritt weitergefördert werden.

Die Biegemaschine 100 hat eine optionale integrierte Verdreheinrichtung 200, die dazu konfiguriert ist, vor Abtrennen des Biegeteils von dem zugeführten Flachmaterial in mindestens einem Abschnitt des Flachmaterials mittels einer Verdreh-Operation durch Torsion des Flachmaterials eine bleibende Verformung zu erzeugen. Alle zum Eingriff am Flachmaterial vorgesehenen Komponenten der Verdreheinrichtung 200 sind im Bereich zwischen dem Austritt der Einzugseinrichtung 160 und dem Biegekopf 300 der Biegeeinheit 150 angeordnet. Diese Konfiguration wird in dieser Anmeldung als "Inline-Verdreheinrichtung" bezeichnet. Die Verdreheinrichtung 200 umfasst eine drehbare Komponente 210, die mittels eines damit gekoppelten oder koppelbaren Verdrehantriebs (nicht gezeigt) um eine Verdrehachse verdrehbar ist, die parallel zur Vorschubrichtung des Flachmaterials bzw. zur x-Richtung verläuft. Die in einem maschinenfesten Lagerelement 240 unbegrenzt drehbar gelagerte verdrehbare Komponente hat eine axial durchgehende Durchführungsöffnung für das Flachmaterial, deren flach rechteckige Querschnittsform der flach rechteckigen Querschnittsform des Flachmaterials so angepasst ist, dass das Flachmaterial ungehemmt mit geringem seitlichen Spiel durch die Durchführungsöffnung hindurchgeführt werden kann. Die verdrehbare Komponente arbeitet mit einer nachgeschalteten Gegenhaltereinrichtung zusammen, deren Funktion z.B. durch den Biegekopf oder durch einen gesonderten Gegenhalter übernommen werden kann. Die Gegenhaltereinrichtung ist dazu ausgebildet, die Orientierung des Flachmaterials im Bereich der Gegenhaltereinrichtung zu fixieren, während die verdrehbare Komponente sich dreht, um die Torsion zu erzeugen.

Mit der Biegemaschine 100 können unter anderem zweidimensional oder dreidimensional gebogene Stromschienen gefertigt werden, wie sie unter anderem in der Automobilbranche zum Transport elektrischer Energie zwischen Fahrzeugbaugruppen oder innerhalb von Batteriegruppen benötigt werden. Das Ausgangsmaterial ist in diesem Fall ein isoliertes Flachmaterial 190, welches im Wesentlichen aus einem elektrisch leitenden, metallischen Trägermaterial, einem Haftvermittler auf der Oberfläche des Trägermaterials sowie einer elektrisch isolierenden Isolationsschicht auf dem Haftvermittler besteht. Das Trägermaterial hat in der Regel einen flachen Rechteckquerschnitt mit Breitseiten und senkrecht dazu verlaufenden Schmalseiten. Die Isolationsschicht umhüllt das Trägermaterial vollständig. Die Isolationsschicht wird häufig aus bestimmten Polyamid-Kunststoffen gefertigt. Das Trägermaterial besteht meist aus Kupfer (Cu) oder Aluminium (AI) oder aus auf Cu oder Al basierenden Legierungen und ist für die Leitung des Stroms zuständig.

Die Breite des Flachmaterials (gemessen in Breitenrichtung senkrecht zur Längsrichtung) kann ein Vielfaches der Dicke (gemessen an den Schmalseiten) betragen, beispielsweise das Dreifache bis Siebenfache. Breiten können z.B. in der Größenordnung einiger Millimeter liegen. Die Isolationsschicht hat üblicherweise eine Dicke von weniger als 1 mm. Der Begriff "Rechteckquerschnitt" ist nicht mathematisch exakt zu verstehen sondern umfasst auch Varianten, bei denen die Kanten zwischen im Wesentlichen ebenen Seitenflächen mehr der weniger stark abgerundet sind.

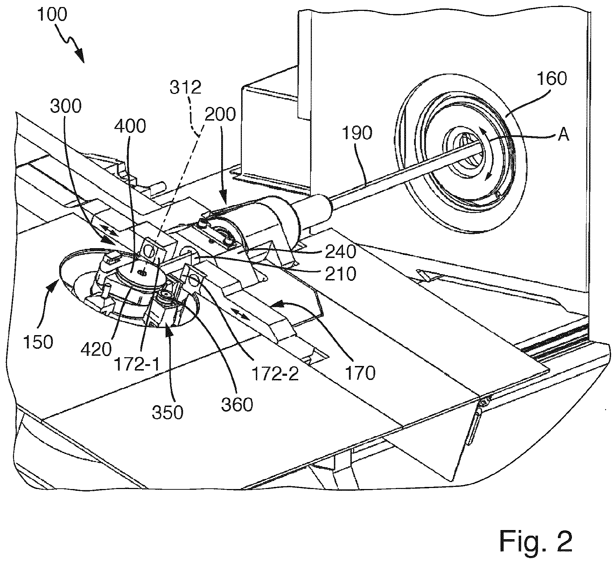

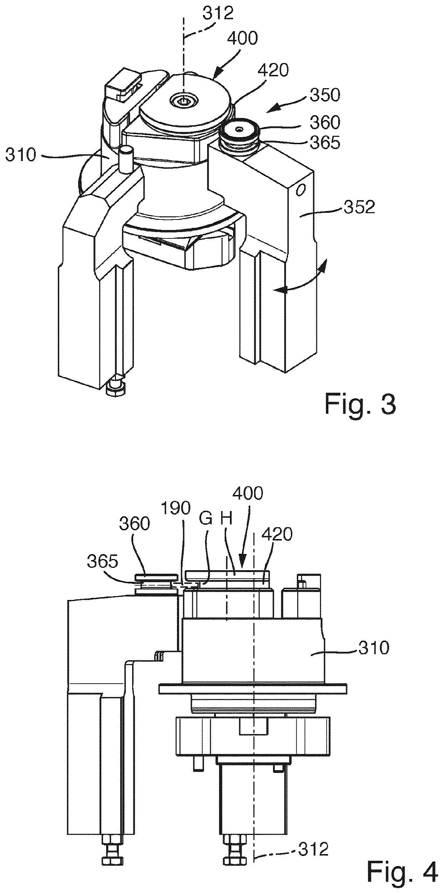

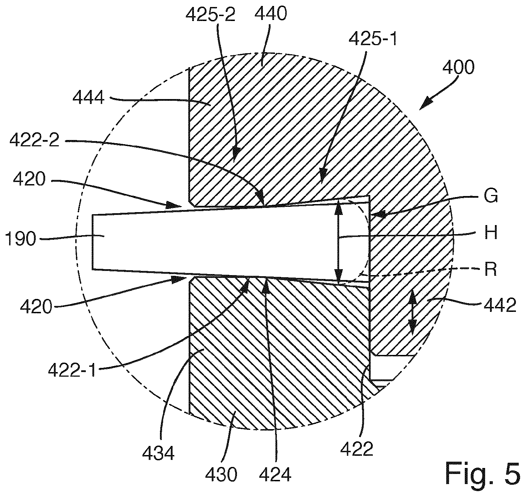

Nachfolgend wird der Biegekopf 300 der Biegeeinrichtung 150 näher erläutert. Fig. 2 zeigt einige von oben sichtbare Komponenten des Biegekopfs 300, der in Vorschubrichtung bzw. Einzugsrichtung des Flachmaterials 190 hinter der Einzugseinrichtung 160, der optionalen Verdreheinrichtung 200 und der Schnitteinrichtung 170 angeordnet ist. Fig. 3 zeigt weitere Details des Biegekopfs in schräger Perspektive, Fig. 4 zeigt Komponenten des Biegekopfs in Seitenansicht. Fig. 5 zeigt eine Schnittansicht durch den Bereich der Umfangsnut der Biegeform beim Ausführungsbeispiel. Fig. 6 zeigt in 6A, 6B und 6C verschiedene Phasen einer Biegeoperation bei einem anderen Ausführungsbeispiel, bei dem die Umfangsnut eine etwas andere Innenkontur aufweist.

Der Biegekopf 300 weist einen Biegeformträger 310 auf, der parallel zur Biegeachse 312 verfahrbar und um die Biegeachse bzw. Biegekopfachse herum drehbar ist. Auf der Oberseite der Biegeformträgers 310 ist zentrisch zur Biegeachse eine Biegeform 400 mit Hilfe einer zentrischen Schraube und einer Nut-Feder-Verbindung drehfest montiert. An der Biegeform 400 ist über mehr als die Hälfte ihres Umfangs eine umlaufende Umfangsnut 420 ausgebildet, die zum Aufnehmen eines zu biegenden Abschnitts des Flachmaterials dient. Wie in Fig. 4 gut zu erkennen ist, ist die Umfangsnut 420 als im Querschnitt annähernd rechteckige flache Umfangsnut ausgebildet, bei der die lichte Höhe H (gemessen parallel zur Biegekopfachse 312) kleiner ist als die radiale Tiefe (gemessen in Radialrichtung zum Zentrum der Biegeform) zwischen der äußeren Mündung in dem innen liegenden Nutgrund G. Die Umfangsnut kann vor allem im Bereich des Nutgrundes abgerundete Innenecken aufweisen.

Der Biegekopf 300 weist weiterhin ein um die Biegekopfachse drehbares Biegewerkzeug 350 auf, das mittels eines eigenen Antriebs (Biegeantrieb) um die Biegeform 400 herum drehbar ist. Das drehbare Biegewerkzeug hat einen L-förmigen Biegerollenhalter 352, an dessen Oberseite eine Biegerolle 360 montiert ist. Die Biegerolle 360 ist um eine parallel zur Biegekopfachse verlaufende Drehachse frei drehbar gelagert und hat an ihrem Umfang eine komplett umlaufende Umfangsnut 365, deren Höhe so dimensioniert ist, dass das umzubiegende Flachmaterial mit einer Schmalseite in die Umfangsnut hinein passt. Das drehbare Biegewerkzeug 350 mit der Biegerolle 360 ist zum Angreifen an einem umzubiegenden Abschnitt des Flachmaterials vorgesehen und bewegt sich bei der Biegeoperation auf einem Kreisbogen um die Biegeform herum.

Die Biegerolle 360 ist mit ihrer Umfangsnut auf gleicher Höhe wie die gegenüberliegende Umfangsnut 420 der Biegeform angeordnet. In Fig. 4 ist gestrichelt angedeutet, wie ein umzubiegendes Flachmaterial 190 mit seinen Schmalseiten in die Umfangsnut 420 der Biegeform 400 und die gegenüberliegende Umfangsnut 365 der Biegerolle 360 beim Biegen eingreift.

Der Biegekopf ist für ein Biegeverfahren ausgelegt, das als Rollbiegen oder Stiftbiegen bezeichnet werden kann. Zur Durchführung einer Biegeoperation wird zunächst ein mit einer Biegung zu versehener Flachmaterialabschnitt in eine Ausgangsstellung im Eingriffsbereich des Biegekopfs gebracht in der Weise, dass das zugeführte Flachmaterial mit derjenigen Schmalseite, an der später die Innenkontur der Biegung liegen soll, teilweise in die Umfangsnut 420 an der Biegeform 400 eingreift. Im Beispielsfall mit Biegerolle 360 wird das Biegewerkzeug dann von der Seite so angelegt, dass die gegenüberliegende Schmalseite des Flachmaterials in die Umfangsnut 365 der Biegerolle 360 teilweise eingreift. Die Biegerolle greift dann beim Drehen des Biegewerkzeugs an demjenigen Abschnitt des Flachmaterials an, dessen Orientierung durch Biegen verändert werden soll.

Danach wird in einer Biegeoperation durch Drehen des drehbaren Biegewerkzeugs 350 um die Biegekopfachse 312 eine Biegung zwischen dem auf der Zuführseite des Flachmaterials liegenden, nicht umzubiegenden Abschnitt und dem umzubiegenden Abschnitt erzeugt. Die Außenkontur der Biegeform 400 am radial innen liegenden Grund G der Umfangsnut 420 stabilisiert dabei die Innenkontur der Biegung nach Art eines Biegedorn und gibt deren Radius vor. Auf diese Weise wird am Flachmaterial 190 eine ebene Biegung parallel zu einer Biegeebene erzeugt, die senkrecht zur Biegekopfachse auf Höhe der Umfangsnut 420 liegt. Eine derartige Biegung um eine kurze Seite bzw. um eine Schmalseite des Flachmaterials 190 wird hier auch als flache Biegung bezeichnet.

Eine Besonderheit besteht darin, dass die Biegeform 400 als geteilte Biegeform konstruiert ist, die es ermöglicht, die lichte Höhe H der Umfangsnut 420 in gewissen Grenzen stufenlos zu verändern und die Biegeform unter Veränderung dieser lichten Höhe zu öffnen und zu schließen. Die Biegeform hat dazu ein unteres Formteil 430, welches fest am Biegeformträger 310 montiert ist, sowie ein oberes Formteil 440, welches gegenüber dem unteren Formteil parallel zur Biegekopfachse 312 in gewissen Grenzen stufenlos verschiebbar ist. Das ist in Fig. 5 besonders gut zu erkennen.

Das untere Formteil 430 weist zentrisch eine nach oben offene Führungsöffnung 432 auf. Die Führungsöffnung 432 wird von einem erhöhten Rand 434 umschlossen. Das obere Formteil 440 hat an seiner dem unteren Formteil zugewandten Unterseite einen Führungsabschnitt 442, dessen zylindrische Außenkontur so bemessen ist, dass sie im Wesentlichen spielfrei, aber axial verschiebbar in die Führungsöffnung 432 am unteren Formteil 430 hinein passt, so dass das obere Formteil direkt innerhalb des unteren Formteils axial geführt wird. An den zylindrischen Führungsabschnitt schließt sich nach oben ein gegenüber dem Führungsabschnitt verbreiterter Kopfabschnitt 444 an, dessen Außenbereich oberhalb des umlaufenden Randes 434 liegt.

Die dem Kopfabschnitt 440 zugewandte Oberseite des umlaufenden Randes 434 bildet die untere Begrenzungsfläche 422-1 der Umfangsnut 420. Die dem umlaufenden Rand 434 zugewandte Unterseite des nach außen ragenden Teils 444 des Kopfabschnitts bildet die obere Begrenzungsfläche 422-2 der Umfangsnut 420. Die zwischen diesen Begrenzungsflächen frei liegende zylindrisch gekrümmte Außenfläche des Führungsabschnitts 442 bildet die radial innenliegende Grundfläche bzw. den Grund G der Umfangsnut 420. Die Umfangsnut ist somit unabhängig von der eingestellten lichten Höhe H nach oben, nach unten und nach innen vollständig geschlossen.

Es ist aus Fig. 5 unmittelbar ersichtlich, dass die lichte Höhe H der Umfangsnut (gemessen zwischen den einander zugewandten Begrenzungsflächen 422-1 und 422-2) durch Anheben und Absenken des oberen Formteils gegenüber dem unteren Formteil stufenlos vergrößert bzw. verkleinert werden kann. Das Anheben und Absenken des oberen Formteils 440 parallel zur Biegekopfachse wird durch einen zum Biegekopf gehörenden gesonderten Antrieb erreicht, der einen mit dem oberen Formteil 440 gekoppelten Servomotor umfasst.

Eine Besonderheit der Nutgeometrie besteht darin, dass die Umfangsnut 420 nicht als reine Rechtecknut (mit zueinander parallelen oberen und unteren Begrenzungsflächen) ausgelegt ist, sondern sich von einem radial außenliegenden äußeren Nutbereich 425-2 in Radialrichtung nach innen in Richtung eines weiter innenliegenden inneren Nutbereichs 425-1 wenigstens abschnittsweise erweitert. In anderen Worten: die Umfangsnut 420 hat einen radial innen liegenden inneren Nutbereich 425-1 und einen radial weiter außen liegenden äußeren Nutbereich 425-2, wobei die lichte Höhe H der Umfangsnut im inneren Nutbereich 425-1 größer ist als im äußeren Nutbereich 425-2. Im Beispielsfall von Fig. 5 ist die lichte Höhe im äußeren Nutbereich 425 bis zu einem etwa mittig in der Tiefe der Umfangsnut liegenden Übergang 424 konstant (zueinander parallele Abschnitte der Begrenzungsflächen) und nimmt vom Übergang 424 nach radial innen kontinuierlich zu. Die Begrenzungsflächen sind in diesem inneren Nutbereich leicht konisch mit einem Konuswinkel im Bereich von 4° bis 6°. Dadurch wird der Nutquerschnitt im inneren Nutbereich keilförmig mit dem dünneren Ende nach außen. Die Umfangsnut hat eine Querschnittsform, die bezogen auf eine senkrecht zur Biegeachse verlaufende Mittelebene durch die Umfangsnut spiegelsymmetrisch ist, so dass sich im inneren Nutbereich eine Erweiterung nach oben und nach unten, d.h. an beiden Breitseiten des Flachmaterials, ergibt.

Abweichend von der Haupt-Darstellung in Fig. 5 gibt es auch Varianten, bei denen die Innenecken der Umfangsnut am Übergang zwischen den oberen und/oder unteren Begrenzungsflächen und dem Nutgrund abgerundet sind. Eine Variante mit abgerundeten Innenecken bzw. einem Radius R am Übergang ist in Fig. 5 mit gestrichelter Linie nicht maßstäblich dargestellt. Es hat sich herausgestellt, dass sich durch abgerundete Innenecken in manchen Fällen, z.B. beim Biegen von isoliertem Flachmaterial mit abgerundeten oder eckigen Kanten, bessere Qualitäten hinsichtlich Isolierschichtdicke im Kantenbereich und/oder Haftungseigenschaften erzielen lassen. Um Druckstellen zu vermeiden, kann die Innenkontur des Werkzeugs ebenfalls abgerundet werden. Durch die angepasste Form von Werkzeug und Werkstück entstehen keine oder weniger Druckstellen außen an der Isolationsschicht und dadurch ein besseres Biegeergebnis.

Die beschriebene Erweiterung (Vergrößerung der lichten Höhe) der Umfangsnut in Richtung zum innen liegenden Nutgrund G bringt erhebliche Vorteile hinsichtlich der Qualität der finalen Geometrie von Flachmaterial mit flachen Biegungen. Das noch unverbogene Flachmaterial hat zunächst einen Rechteckquerschnitt und wird vor dem Biegen mit einer Schmalseite teilweise seitlich in die Umfangsnut 420 eingeführt, bis es am Nutgrund anschlägt. Dann wird das Werkzeug (die Biegeform 400) geschlossen, bis das Flachmaterial im Wesentlichen spielfrei, jedoch ohne eingeklemmt zu werden, in Richtung parallel zur Biegekopfachse formschlüssig zwischen den Begrenzungsflächen 422-1, 422-2 im äußeren Nutbereich 425-2 festgelegt ist. In diesem Stadium gibt es im inneren Nutbereich sowohl oben als auch unten nach innen zunehmend größer werdende Freiräume.

Wird das Flachmaterial dann durch Verdrehen des Biegewerkzeugs 350 um die Biegekopfachse 312 umgebogen, wird das Flachmaterial an seiner außerhalb der Umfangsnut liegenden Außenkontur gestreckt und nimmt an Dicke ab, während im Bereich der Innenkontur eine mit geringer werdendem Abstand zum Biegezentrum stärker werdende Stauchung des Flachmaterials auftritt, die zu einer Verdickung des Materials bzw. zu einer Wulstbildung an der Innenkontur führt. Diese Materialausdehnung wird durch die konstruktiv vorgesehenen Freiräume im inneren Nutbereich zugelassen, ohne dass auf das Material weitere Zwangskräfte einwirken. Etwa mittig zwischen Außenkontur und Innenkontur bleibt die Dicke des Flachmaterials im Bereich der neutralen Zone weitgehend konstant, weshalb sich in diesem Bereich zwischen den Begrenzungsflächen ein Führungsbereich für das Flachmaterial ergibt. Die Gestalt der Biegung an der Innenkontur wird durch die konvex-zylindrische Gestalt der die Umfangsnut radial begrenzenden Außenfläche des Führungsabschnitts 442 exakt vorgegeben.

Nach dem Biegevorgang spannen der umgebogene und der nicht umgebogene Abschnitt eine Ebene auf, in der auch die erzeugte Biegung liegt (ebene Biegung). Es kommt nicht oder kaum zu einer Verwindung des Biegeteils.

Anhand der Fig. 6A, 6B und 6C werden verschiedene Phasen der Biegeoperation anhand eines anderen Ausführungsbeispiels erläutert. In diesem Ausführungsbeispiel hat die Umfangsnut 620 eine Querschnittsform derart, dass die lichte Höhe H vom radial außen liegenden Ende, also im äußeren Nutbereich, zum radial innen liegenden Ende (Nutgrund G im inneren Nutbereich) kontinuierlich zunimmt, so dass der Querschnitt der Umfangsnut keilförmig ist.

Das obere Formteil 640 ist in diesem Beispiel fest am Biegeformträger montiert, während das untere Formteil 630 zum Verändern der lichten Höhe H der Umfangsnut verschiebbar ist.

Fig. 6A zeigt die Situation nach Einlegen des noch nicht verbogenen Flachmaterials 190 in die Umfangsnut 620 vor Schließen der Biegeform durch Anheben des unteren Formteils 630 gegenüber dem oberen Formteil 640.

Fig. 6B zeigt die Konfiguration nach Schließen der Biegeform und Durchführen einer Biegeoperation, bei der sich im Bereich der Innenkontur des Flachmaterials eine Stauchung und dadurch eine Materialverdickung ergeben hat, während der außerhalb der Umfangsnut 620 liegende Bereich nahe der Außenkontur eine Streckung und eine damit verbundene Dickenreduzierung erfuhr. In dem gezeigten, noch geschlossenen Zustand der Biegeform wäre eine Entnahme des nun im Querschnitt keilförmigen Flachmaterials aus der im Querschnitt ebenfalls keilförmigen Umfangsnut nicht möglich, da die Dicke des Flachmaterials am innenliegenden Radius aufgrund der Verdickung größer geworden ist als die lichte Höhe der Umfangsnut an der Außenseite der Biegeform. Eine Entnahme des Flachmaterials ist möglich, nachdem die Biegeform durch Absenken des unteren Formteils geöffnet wurde (Fig. 6C).

## Patentansprüche

1. Biegemaschine (100) zur Herstellung von Biegeteilen aus Flachmaterial (190) umfassend:
eine Einzugseinrichtung (160) zum Einziehen von Flachmaterial von einem Materialvorrat mit Flachmaterial,
eine Biegeeinrichtung (150) mit einem Biegekopf (300) zum Biegen des Flachmaterials zu einem zwei- oder dreidimensional gebogenen Biegeteil aus Flachmaterial; und
eine Schnitteinrichtung (170) zum Abtrennen des Biegeteils von dem zugeführten Flachmaterial,
wobei der Biegekopf eine Biegeform (400, 600) mit einer Umfangsnut (420, 620) zum Aufnehmen eines zu biegenden Abschnitts des Flachmaterials (190) und ein um die Biegeform herum drehbares Biegewerkzeug (350) zum Angreifen an einem umzubiegenden Abschnitt des Flachmaterials aufweist,
**dadurch gekennzeichnet, dass**
die Biegeform (400, 600) als geteilte Biegeform ausgelegt ist, die ein unteres Formteil (430, 630) und ein relativ zum unteren Formteil bewegliches oberes Formteil (440, 640) aufweist, wobei eine untere Begrenzungsfläche (422-1) der Umfangsnut an dem unteren Formteil und eine obere Begrenzungsfläche (422-2) der Umfangsnut an dem oberen Formteil ausgebildet ist, und
das obere Formteil und das untere Formteil zum Verändern der lichten Höhe (H) der Umfangsnut zwischen einer geschlossenen Konfiguration mit relativ kleinerer lichter Höhe und einer geöffneten Konfiguration mit gegenüber der kleineren lichten Höhe größerer lichter Höhe relativ zueinander verschiebbar sind,
wobei eines der Formteile eine Führungsöffnung (432) zur axialen Führung einer Verschiebungsbewegung des anderen Formteils aufweist, das andere Formteil einen zum Einführen in die Führungsöffnung dimensionierten Führungsabschnitt (442) und einen gegenüber dem Führungsabschnitt verbreiterten Kopfabschnitt (444) aufweist, wobei eine radiale Außenfläche des Führungsabschnitts die Umfangsnut (420, 620) nach innen begrenzt und an dem Kopfabschnitt eine der Begrenzungsflächen der Umfangsnut ausgebildet ist.

2. Biegemaschine nach Anspruch 1, **dadurch gekennzeichnet, dass** das untere Formteil (430) die Führungsöffnung (432) zur axialen Führung einer Verschiebungsbewegung des oberen Formteils aufweist und das obere Formteil (440), den zum Einführen in die Führungsöffnung dimensionierten Führungsabschnitt (442) und den gegenüber dem Führungsabschnitt verbreiterten Kopfabschnitt (444) aufweist.

3. Biegemaschine nach Anspruch 1 oder 2, **dadurch gekennzeichnet, dass** der Führungsabschnitt (442) zumindest an derjenigen Seite, an welcher der Eingriff des Flachmaterials in die Umfangsnut (420) erfolgt, eine zylindrische Außenkontur aufweist derart, dass die radial innenliegende Grundfläche (G) der Umfangsnut (420) durch den zwischen den oberen und unteren Begrenzungsflächen freiliegenden Teil der radialen Außenfläche des Führungsabschnitts gebildet wird.

4. Biegemaschine nach einem der vorhergehenden Ansprüche, **dadurch gekennzeichnet, dass** die Umfangsnut (420) einen radial innen liegenden inneren Nutbereich (425-1) und einen radial weiter außen liegenden äußeren Nutbereich (425-2) aufweist, wobei die lichte Höhe (H) der Umfangsnut im inneren Nutbereich größer ist als im äußeren Nutbereich.

5. Biegemaschine nach Anspruch 4, **dadurch gekennzeichnet, dass** die untere Begrenzungsfläche (422-1) und die obere Begrenzungsfläche (422-2) der Umfangsnut in dem äußeren Nutbereich (425-2) parallel zueinander verlaufen und die lichte Höhe ab einem Übergang (424) von dem äußeren Nutbereich zum inneren Nutbereich (425-1) in Richtung des Nutgrundes, vorzugsweise kontinuierlich, zunimmt.

6. Biegemaschine nach Anspruch 5, **dadurch gekennzeichnet, dass** eine radiale Erstreckung des inneren Nutbereichs vom Nutgrund (G) bis zum Übergang (424) an die Breite des Flachmaterials (190) derart angepasst ist, dass die radiale Erstreckung zwischen 30% und 70% der Breite des Flachmaterials beträgt.

7. Biegemaschine nach Anspruch 4, **dadurch gekennzeichnet, dass** die lichte Höhe (H) der Umfangsnut (620) von einem radial äußeren Bereich der Umfangsnut nach radial innen kontinuierlich zunimmt, so dass die Umfangsnut (620) eine keilförmige Querschnittsform aufweist.

8. Biegemaschine nach einem der Ansprüche 4 bis 7, **dadurch gekennzeichnet, dass** die Umfangsnut eine Querschnittsform aufweist, die bezogen auf eine senkrecht zur Biegeachse verlaufende Mittelebene durch die Umfangsnut spiegelsymmetrisch ist.

9. Biegemaschine nach einem der vorhergehenden Ansprüche, **dadurch gekennzeichnet, dass** das untere Formteil (430) der geteilten Biegeform bezüglich eines Biegeformträgers (310) fest montiert und das obere Formteil (440) bezüglich des unteren Formteils mittels eines darauf wirkenden Antriebs anhebbar und absenkbar ist.

## Claims

1. Bending machine (100) for producing bent parts from flat material (190), comprising:
a drawing-in device (160) for drawing in flat material from a material supply with flat material, a bending device (150) with a bending head (300) for bending the flat material to form a bent part composed of flat material that is bent in a two-dimensional or three-dimensional manner; and
a cutting device (170) for cutting off the bent part from the fed flat material,
wherein the bending head has a bending mandrel (400, 600) with a peripheral groove (420, 620) for receiving a portion of the flat material (190) that is to be bent, and has a bending tool (350) which is rotatable around the bending mandrel and which serves for acting on a portion of the flat material that is to be bent over,
**characterized in that**
the bending mandrel (400, 600) is designed as a split bending mandrel which has a lower mandrel part (430, 630) and an upper mandrel part (440, 640) that is movable relative to the lower mandrel part, wherein a lower delimitation surface (422-1) of the peripheral groove is formed on the lower mandrel part and an upper delimitation surface (422-2) of the peripheral groove is formed on the upper mandrel part, and
the upper mandrel part and the lower mandrel part are displaceable relative to one another for changing the clear height (H) of the peripheral groove between a closed configuration with a relatively small clear height and an open configuration with a larger clear height in comparison with the relatively small clear height, wherein one of the mandrel parts has a guide opening (432) for axial guidance of a displacement movement of the other mandrel part, and the other mandrel part has a guide portion (442) dimensioned for introduction into the guide opening and has a head portion (444) which is widened in comparison with the guide portion, wherein a radial outer surface of the guide portion inwardly delimits the peripheral groove (420, 620) and one of the delimitation surfaces of the peripheral groove is formed on the head portion.

2. Bending machine according to Claim 1, **characterized in that** the lower mandrel part (430) has the guide opening (432) for axial guidance of a displacement movement of the upper mandrel part, and the upper mandrel part (440) has the guide portion (442) dimensioned for introduction into the guide opening and has the head portion (444) which is widened in comparison with the guide portion.

3. Bending machine according to Claim 1 or 2, **characterized in that** the guide portion (442) has, at least on that side on which the flat material engages into the peripheral groove (420), a cylindrical outer contour such that the radially inner base surface (G) of the peripheral groove (420) is formed by that part of the radial outer surface of the guide portion which is exposed between the upper and lower delimitation surfaces.

4. Bending machine according to one of the preceding claims, **characterized in that** the peripheral groove (420) has an inner groove region (425-1) situated radially at the inside and has an outer groove region (425-2) situated radially further to the outside, wherein the clear height (H) of the peripheral groove is larger in the inner groove region than in the outer groove region.

5. Bending machine according to Claim 4, **characterized in that** the lower delimitation surface (422-1) and the upper delimitation surface (422-2) of the peripheral groove extend parallel to one another in the outer groove region (425-2) and, from a transition (424) from the outer groove region to the inner groove region (425-1) in the direction of the groove base, the clear height increases, preferably continuously.

6. Bending machine according to Claim 5, **characterized in that** a radial extent of the inner groove region from the groove base (G) as far as the transition (424) is adapted to the width of the flat material (190) such that the radial extent is between 30% and 70% of the width of the flat material.

7. Bending machine according to Claim 4, **characterized in that** the clear height (H) of the peripheral groove (620) continuously increases from a radially outer region of the peripheral groove radially inwards, so that the peripheral groove (620) has a wedge-shaped cross-sectional form.

8. Bending machine according to one of Claims 4 to 7, **characterized in that** the peripheral groove has a cross-sectional form which is mirror-symmetrical with respect to a central plane through the peripheral groove that extends perpendicularly to the bending axis.

9. Bending machine according to one of the preceding claims, **characterized in that** the lower mandrel part (430) of the split bending mandrel is mounted fixedly with respect to a bending-mandrel support (310), and the upper mandrel part (440) is liftable and lowerable with respect to the lower mandrel part by means of a drive acting thereon.

## Revendications

1. Machine de cintrage (100) pour la fabrication de pièces cintrées à partir d'un matériau plat (190), comprenant :
un dispositif d'alimentation (160) pour l'alimentation en matériau plat à partir d'une réserve de matériau avec du matériau plat,
un dispositif de cintrage (150) avec une tête de cintrage (300) pour le cintrage du matériau plat en une pièce cintrée bi- ou tridimensionnellement en matériau plat ; et
un dispositif de coupe (170) pour la séparation de la pièce cintrée du matériau plat fourni,
la tête de cintrage présentant un moule de cintrage (400, 600) ayant une rainure circonférentielle (420, 620) pour la réception d'une section du matériau plat (190) à cintrer et un outil de cintrage (350) rotatif autour du moule de cintrage pour agir sur une section du matériau plat à cintrer,
**caractérisée en ce que**
le moule de cintrage (400, 600) est conçu sous forme de moule de cintrage divisé qui présente une partie de moule inférieure (430, 630) et une partie de moule supérieure (440, 640) mobile par rapport à la partie de moule inférieure, une surface de délimitation inférieure (422-1) de la rainure circonférentielle étant réalisée sur la partie de moule inférieure et une surface de délimitation supérieure (422-2) de la rainure circonférentielle étant réalisée sur la partie de moule supérieure, et
la partie de moule supérieure et la partie de moule inférieure sont déplaçables l'une par rapport à l'autre pour modifier la hauteur libre (H) de la rainure circonférentielle entre une configuration fermée avec une hauteur libre relativement plus petite et une configuration ouverte avec une hauteur libre plus grande par rapport à la hauteur libre plus petite,
l'une des parties de moule présentant une ouverture de guidage (432) pour le guidage axial d'un mouvement de déplacement de l'autre partie de moule, l'autre partie de moule présentant une section de guidage (442) dimensionnée pour l'insertion dans l'ouverture de guidage et une section de tête (444) élargie par rapport à la section de guidage, une surface extérieure radiale de la section de guidage délimitant la rainure circonférentielle (420, 620) vers l'intérieur et l'une des surfaces de délimitation de la rainure circonférentielle étant réalisée sur la section de tête.

2. Machine de cintrage selon la revendication 1, **caractérisée en ce que** la partie de moule inférieure (430) présente l'ouverture de guidage (432) pour le guidage axial d'un mouvement de déplacement de la partie de moule supérieure, et la partie de moule supérieure (440) présente la section de guidage (442) dimensionnée pour l'insertion dans l'ouverture de guidage et la section de tête (444) élargie par rapport à la section de guidage.

3. Machine de cintrage selon la revendication 1 ou 2, **caractérisée en ce que** la section de guidage (442) présente un contour extérieur cylindrique au moins du côté où l'engagement du matériau plat dans la rainure circonférentielle (420) a lieu, de telle sorte que la surface de base (G), située radialement à l'intérieur, de la rainure circonférentielle (420) est formée par la partie de la surface extérieure radiale de la section de guidage qui est exposée entre les surfaces de délimitation supérieure et inférieure.

4. Machine de cintrage selon l'une quelconque des revendications précédentes, **caractérisée en ce que** la rainure circonférentielle (420) présente une zone de rainure intérieure (425-1) située radialement à l'intérieur et une zone de rainure extérieure (425-2) située radialement plus à l'extérieur, la hauteur libre (H) de la rainure circonférentielle étant plus grande dans la zone de rainure inférieure que dans la zone de rainure extérieure.

5. Machine de cintrage selon la revendication 4, **caractérisée en ce que** la surface de délimitation inférieure (422-1) et la surface de délimitation supérieure (422-2) de la rainure circonférentielle dans la zone de rainure extérieure (425-2) sont parallèles l'une à l'autre et la hauteur libre augmente, de préférence de manière continue, à partir d'une transition (424) de la zone de rainure extérieure à la zone de rainure intérieure (425-1) en direction du fond de la rainure.

6. Machine de cintrage selon la revendication 5, **caractérisée en ce qu'**une extension radiale de la zone de rainure intérieure depuis le fond de la rainure (G) jusqu'à la transition (424) est adaptée à la largeur du matériau plat (190) de telle sorte que l'extension radiale est comprise entre 30 % et 70 % de la largeur du matériau plat.

7. Machine de cintrage selon la revendication 4, **caractérisée en ce que** la hauteur libre (H) de la rainure circonférentielle (620) augmente de manière continue radialement vers l'intérieur depuis une zone radialement extérieure de la rainure circonférentielle, de telle sorte que la rainure circonférentielle (620) présente une forme de section transversale cunéiforme.

8. Machine de cintrage selon l'une quelconque des revendications 4 à 7, **caractérisée en ce que** la rainure circonférentielle présente une forme de section transversale qui est symétrique par rapport à un plan médian perpendiculaire à l'axe de cintrage en passant par la rainure circonférentielle.

9. Machine de cintrage selon l'une quelconque des revendications précédentes, **caractérisée en ce que** la partie de moule inférieure (430) du moule de cintrage divisé est montée de manière fixe par rapport à un support de moule de cintrage (310) et la partie de moule supérieure (440) peut être soulevée et abaissée par rapport à la partie de moule inférieure au moyen d'un entraînement agissant sur celle-ci.
